# FASCICULE DE BREVET EUROPEEN

(11) **EP 0 483 074 B1**
(45) Date de publication et mention de la délivrance du brevet: **14.06.1995**
(21) Numéro de dépôt: 91830106.0
(22) Date de dépôt: 15.03.1991
(51) Int. Cl.: A01K 97/12

(54) **Dispositif indicateur de la touche pour la pêche à la ligne, en particulier avec un moulinet**
Bissanzeiger zum Angeln, insbesondere mit Angelrolle
Bit indicator for angle, particularly with fly-fishing reel

(30) Priorité: 23.10.1990 IT 950890
(43) Date de publication de la demande: 29.04.1992
(73) Titulaire: Calamai, Giancarlo, I-50045 Montemurlo (Firenze) (IT)
(72) Inventeur: Calamai, Giancarlo, I-50045 Montemurlo (Firenze) (IT)
(74) Mandataire: Martini, Lazzaro

(56) Documents cités:
- DE-A- 3 824 381
- GB-A- 873 456
- GB-A- 955 551
- GB-A- 1 509 331
- GB-A- 1 603 804
- US-A- 4 746 253

## Description

La présente invention concerne un dispositif pour signaler une touche pendant la pêche à la ligne, en particulier avec un moulinet.

Il est connu que dans les types de pêche traditionnelle, tels que la pêche avec le flotteur ou bouchon et au fond, l'indication de la touche est fournie, respectivement, par l'immersion du flotteur ou par le mouvement de l'extrémité de la canne sous l'effet de la traction de la ligne par le poisson au moment de la touche.
Mais ces dispositifs connus gênent le caractère naturel de la touche et compromettent les possibilités de capture des poissons. En outre, la pêche avec le flotteur, pour laquelle il est prévu d'équilibrer le flotteur avec des poids en plomb, ne permet d'effectuer aucune modification du poids d'équilibrage pendant que la ligne est dans l'eau.

On connaît aussi par le document GB-A-1.509.331 un dispositif pour signaler une touche sous l'effet de la traction de la ligne qui comprend un balancier avec deux bras perpendiculaires entre eux et à la canne et avec un pivot monté fou dans un trou parallèle à la canne d'un support fixé sur la canne. Dans la position de repos tandis que le bras d'avertissement est appuyé sur la canne, l'autre est orienté vers le bas en réalisant l'appui pour la ligne hors alignement de la canne; sous l'effet de la traction, la ligne s'aligne suivant la canne ou provoquant l'abaissement du bras adhère à la ligne et l'élévation du bras d'avertissement. Mais ce dispositif connu, à cause du poids des deux bras, est lourd et donc l'avertissement est possible seulement avec une touche vigoureuse.

La présente invention a pour but d'éliminer les inconvénients précités.

Ces résultats ont été atteints conformément à l'invention en adoptant l'idée d'équiper la canne à pêche d'un balancier selon la revendication 1. Cette forme de réalisation permet d'utiliser des cannes munies d'anneaux de guidage de la ligne placés sur le côté supérieur de la canne et de monter une source de lumière pour la signalisation de nuit, directement à l'extrémité libre du balancier.

Les avantages obtenus grâce à la présente invention consistent essentiellement dans le fait que, pour la pêche au fond, on peut immerger la pointe de la canne dans l'eau ou la tenir hors de l'eau et laisser l'aiche libre, de sorte que la touche provoque la traction de la ligne en favorisant le ferrage du poisson; que, pour la pêche de nuit, il est possible de percevoir immédiatement la touche; que la position du dispositif indicateur sur la canne et la possibilité de varier ses conditions de fonctionnement, permettent de modifier la sensibilité en facilitant et en garantissant l'intervention rapide du pêcheur pour ferrer le poisson; que, pour la pêche dans le courant, il est possible de mettre l'aiche dans le courant même très loin, alors que l'aiche est maintenue à la profondeur voulue au moyen d'un simple flotteur en forme de tube; que le dispositif peut être appliqué pendant ou après la fabrication des cannes à pêche.

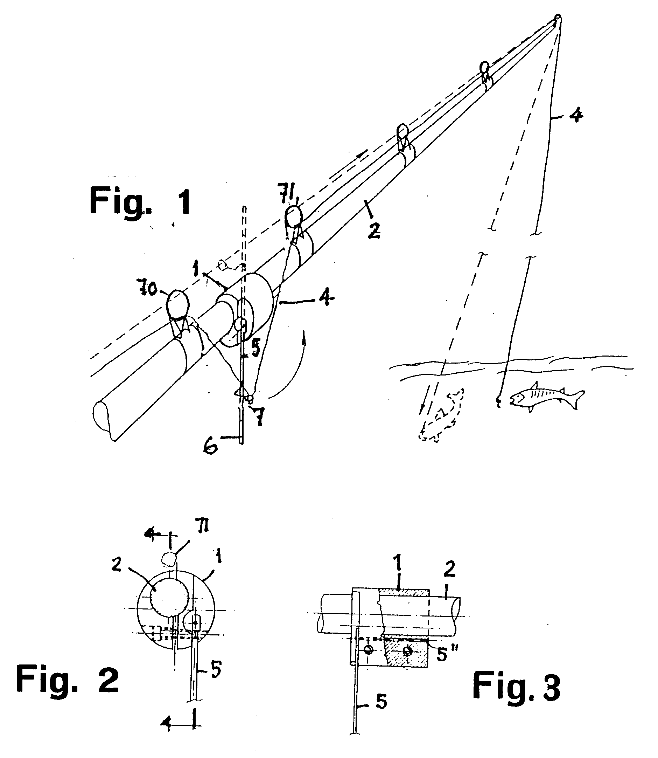

Ces avantages et caractéristiques de l'invention ainsi que d'autres seront plus et mieux compris de chaque homme du métier à la lumière de la description qui va suivre et à l'aide des dessins annexés donnés à titre d'exemple des formes pratiques de réalisation de l'invention, mais à ne pas considérer dans le sens limitatif; dessins sur lesquels: la FIG. 1 représente une vue axonométrique d'ensemble d'un dispositif selon l'invention, respectivement en position de repos (lignes continues) et d'avertissement (lignes en tirets); la Fig.2 représente la vue de côté du dispositif de la FIG. 1; la FIG. 3 représente la vue en coupe longitudinale du support du balancier de la FIG. 1.

Réduit à sa structure essentielle et en référence à la Fig. 1, un dispositif indicateur de la touche conformément à l'invention, comprend:
- un balancier à un seul bras 5 avec le pivot d'articulation 5'' orienté parallèlement à la canne 2 et monté fou dans un trou correspondant d'un support 1 solidaire de la canne. A l'extrémité libre de ce bras 5, il est possible de fixer une source de lumière de type "starlight" 6.
Ce type de balancier est avantageusement applicable sur les cannes qui ont les anneaux 70-71 fixés sur le dessus et non au-dessous la canne 2 et avec la ligne passant dans les anneaux 70 qui se trouvent en amont du balancier, puis dans l'anneau 7 du balancier 5 et enfin dans les anneaux 71 placés en aval du balancier.
Lors de la traction sur la ligne 4 à suite de la touche, la balancier 5 pivote vers le haut dans la direction de la flèche de la FIG. 5 de manière à amener l'anneau 7 et la "starlight" 6 d'au-dessous jusqu'à un position au-dessus de la canne 2.

## Revendications

1. Dispositif indicateur de la touche pour la pêche à la ligne, en particulier avec moulinet, comprenant une canne (2) avec des anneaux (70,71) et un balancier (5) arrangé perpendiculaire à la canne (2) et avec un pivot d'articulation (5'') parallèle à la canne (2) monté fou dans un trou correspondant d'un support (1) fixé sur la canne (2) de manière à pivoter dans un plan orthogonal à la canne (2) d'une position de repos jusq'à une positione d'avertissement complètement au-dessus de la canne (2) sous l'effet de la traction de la ligne (4) caractérisé en ce que les anneaux (70,71) sont placés au-dessus de la canne (2) et ledit balancier (5) est à un seul bras (5) et est pourvu d'un anneau (7) intermédiaire pour le passage de la ligne (4), qui passe également par les anneaux (70,71) placés respectivement en amont et en aval du balancier (5).

2. Dispositif selon la revendication 1, caractérisé en ce que ledit balancier (5) est pourvu d'une source de lumière (6) du type "starlight" fixée, amovible, à son extrémité libre.

## Claims

1. Indication device of a bite for rod and line fishing, in particular with a reel, consisting of a cane (2) with rings ( 70,71 ) and a rocker ( 5 ) arranged perpendicular to the cane ( 2) and with an articulating pivot ( 5'' ) parallel to the cane ( 2 ) mounted running in a hole corresponding to a support (1) fixed on the cane (2) in such a way as to pivot in a plane orthogonal to the cane from a rest position to a warning position completely above the cane (2) and the effect of the pull of the line ( 4), characterized in that the rings ( 70,71 ) are placed above the cane (2) and the said rocker ( 5) is a single arm ( 5) provided with an intermediate ring ( 7 ) for the line ( 4 ) to pass through, which also passes through the rings placed upstream and downstream respectively of the rocker ( 5 ).

2. Device according to Claim 1, characterized in that the said rocker is provided with a light source ( 6 ) of the 'Starlight' type firmly fixed at its free end.

## Patentansprüche

1. Vorrichtung zum Anzeigen des Anbeißens beim Angeln, insbesondere mit einer Angelhaspel, die eine Angelrute (2) mit Führungsringen (70, 71) und einen Schwinghebel (5) umfaßt, der senkrecht zur Angelrute (2) angeordnet ist und eine zur Angelrute (2) parallele Gelenkachse (5'') besitzt, die frei beweglich in einer entsprechenden Bohrung eines an der Angelrute (2) befestigten Trägers (1) so montiert ist, daß der Schwinghebel in einer zur Angelrute (2) senkrechten Ebene unter der Wirkung des Zuges der Angelschnur (4) aus einer Ruhelage bis in eine Anzeigestellung schwenken kann, in der er sich vollständig oberhalb der Angelrute (2) befindet, dadurch **gekennzeichnet,** daß die Führungsringe (70, 71) oberhalb der Angelrute (2) angeordnet sind und daß der Schwinghebel (5) ein einarmiger Hebel (5) ist und einen Zwischen-Führungsring (7) aufweist, durch den die Angelschnur (4) hindurch verläuft, die in gleicher Weise durch die Führungsringe (70, 71) verläuft, die in Verlaufsrichtung gesehen vor bzw. hinter dem Schwinghebel (5) angeordnet sind.

2. Vorrichtung nach Anspruch 1, dadurch **gekennzeichnet,** daß der Schwinghebel (5) mit einer Lichtquelle (6) in Art eines "Starlight" versehen ist, die in lösbarer Weise an seinem freien Ende befestigt ist.
